# EUROPÄISCHE PATENTSCHRIFT

(11) **EP 1 884 442 B1**
(45) Veröffentlichungstag und Bekanntmachung des Hinweises auf die Patenterteilung: **17.09.2008**
(21) Anmeldenummer: 06117913.1
(22) Anmeldetag: 26.07.2006
(51) Int. Cl.: B62D 1/06

(54) **Herstellungsverfahren für Auskleidungsteile mit Dekorlage**
Manufacturing method for linings with decorative layer
Méthode de fabrication pour pièces d'habillage avec couche décorative

(43) Veröffentlichungstag der Anmeldung: 06.02.2008
(73) Patentinhaber: Novem Car Interior Design GmbH, 95519 Vorbach (DE)
(72) Erfinder: Schwenk, Roland, 95473 Creussen (DE); Egerer, Gerhard, 92724 Trabitz (DE)
(74) Vertreter: Szynka, Dirk

(56) Entgegenhaltungen:
- EP-A- 1 095 840
- EP-A- 1 442 957
- EP-A1- 1 069 023
- DE-A1- 1 555 182

## Beschreibung

Die vorliegende Erfindung bezieht sich auf ein Herstellungsverfahren für ein Auskleidungsteil mit einer Dekorlage und ein Lenkrad mit einem solchen Auskleidungsteil.

Auskleidungsteile mit einer Dekorlage sind an sich bekannt. Sie finden insbesondere bei der Inneneinrichtung von Kraftfahrzeugen Anwendung. Typische entsprechende Auskleidungsteile sind etwa: der Schalthebel, der Knauf auf dem Schalthebel, die Griffe zum Zuziehen der Türen, der Griff zum Zuziehen des Schiebedaches und Teile des Lenkrades, insbesondere der Lenkradkranz, womit der außen umlaufende Ring zur Handhabung des Lenkrades gemeint ist.

All diese Auskleidungsteile weisen ein Inneres, einen "Körper", auf, auf welchem die Dekorlage aufgebracht ist. Üblicherweise wird auf die Dekorlage schließlich noch eine Lackschicht aufgetragen.

Oft umfasst die Dekorlage das Auskleidungsteil. "Umfassen" ist hier so zu verstehen, dass sich die Dekorlage entlang eines Umfangs des Körpers über den wesentlichen Teil dieses Umfangs erstreckt. Der entsprechende Umfang des Körpers muss nicht unbedingt (kreis-)rund sein. Die Dekorlage kann etwa auch einen mehreckigen Körper, wie etwa einen Quader, umfassen. Auch kann der Krümmungsradius entlang des Umfangs veränderlich sein. Weiter muss auch kein Krümmungsmittelpunkt vorhanden sein.

Die gattungsgemäße EP 1 095 840 A1 zeigt ein Verfahren zur Herstellung eines Lenkradkranzes, bei dem ein Lenkradkranzkörper zwei Vorsprünge aufweist. Harte Teilschalen werden so auf den Lenkradkranzkörper aufgebracht, dass sie diesen im Wesentlichen umfassen und mit ihren Kanten auf den Vorsprüngen aufsitzen. Über die Oberfläche der aufgebrachten Dekorlage hervorstehende Anteile der Vorsprünge werden abgetragen.

In der EP 1 442 957 A1 ist ebenfalls ein Herstellungsverfahren für einen Lenkradkranz gezeigt. Hier wird eine Dekorlage zusammen mit einer Trägerschicht mit einer Form und einer Gegenform zu Halbschalen geformt. Es ist auch gezeigt, die Kanten der Halbschalen nach dem Herausnehmen aus der Form so zu formen, dass sie beim vollständigen Umfassen eines Lenkradkranzkörpers ineinander greifen können.

Weiter zeigt die DE 15 55 182 A1 eine Lenkradspeiche mit zwei schalenförmigen Bezugsteilen. Diese Bezugsteile weisen je einen Außenmantel auf, welche jeweils fast zur Hälfte das Speicheninnere umfassen. Zwischen den Kanten der Außenmäntel tritt das ansonsten durch die Außenmäntel abgedeckte Material der Bezugsteile hervor.

Schließlich zeigt die EP 1 069 023 A1 auch einen Lenkradkranz. Hier weist ein Lenkradkranzkörper eine Nut auf, in die die Kanten einer Dekorlage eingebracht sind.

Der vorliegenden Erfindung liegt das technische Problem zugrunde, ein bzgl. des Aufbringens der Dekorlage auf den Körper verbessertes Herstellungsverfahren anzugeben.

Die Erfindung bezieht sich auf ein Verfahren zur Herstellung eines Auskleidungsteils mit den Schritten: Aufbringen einer Dekorlage auf einen Körper so dass die Dekorlage den Körper umfasst, wobei die Dekorlage zwei Kanten aufweist, welche über ihre Stärke flächig voneinander beabstandet sind, Einbringen eines aus dem Körper hervortretenden Vorsprungs in den Abstand zwischen den beiden Kanten, gekennzeichnet durch die weiteren Schritte: Aufbringen der Dekorlage auf den Körper durch Anpressen mit einer Form und einer Gegenform und Abzwicken der Dekorlage an dem zu dem Körper distalen Ende des hervortretenden Vorsprunges.

Weiter bezieht sich die Erfindung auf ein Lenkrad, bei dem der Lenkradkranz ein erfindungsgemäß hergestelltes Auskleidungsteil ist.

Bevorzugte Ausgestaltungen der Erfindung sind in den abhängigen Ansprüchen angegeben und werden im Folgenden näher erläutert. Die Offenbarung bezieht sich dabei stets sowohl auf das Herstellungsverfahren als auch auf das Lenkrad.

Der Erfindung liegt die Tatsache zugrunde, dass Auskleidungsteile mit einer den jeweiligen Körper umfassenden Dekorlage oft produktionsbedingt eine Naht bzw. mehrere Nähte in der Dekorlage aufweisen. Üblicherweise stößt in diesen Nähten Dekorlage flächig an Dekorlage; flächig deswegen, weil die Dekorlage eine gewisse Stärke hat und nicht lediglich zweidimensional ist. Als Dekorlagen kommen beispielsweise Holz, Metalle, Kohlefasergewebe und Textilien infrage, also sowohl Kunst- als auch Naturstoffe.

Die Erfindung basiert auf der Beobachtung, dass solche Nahtstellen problematisch sein können. Eine perfekt lückenfreie Naht zwischen den Dekorlagen ist technisch anspruchsvoll herzustellen. Ist der Zuschnitt allerdings nicht perfekt, so können Verunreinigungen oder Feuchtigkeit in die Naht eindringen und die Naht qualitativ weiter verschlechtern.

Besonders problematisch ist dies im Fall von Holz-Holz-Nahtstellen. Holz verändert im Laufe der Zeit und in Abhängigkeit von Umwelteinflüssen sein Volumen, es arbeitet. Ggf. schließt dann die Naht auch bei einem ursprünglich perfekten Zuschnitt nicht mehr an allen Stellen und es kann Feuchtigkeit in die Naht eindringen, was zu einem Quellen des Holzfurnieres führen kann. Üblicherweise sind jedoch gerade Holz-Holz-Nahtstellen nicht perfekt verarbeitet, da dies besonders anspruchsvoll ist. Eine nicht lückenlos geschlossene Naht kann sich auch negativ auf die Optik eines Auskleidungsteiles auswirken.

Die Erfindung basiert auf der Idee, zwischen den Kanten der Dekorlage einen aus dem Körper heraustretenden Vorsprung vorzusehen, so dass in der Naht nicht mehr Dekorlage flächig an Dekorlage stößt. Die Kanten der Dekorlage grenzen nun an den Vorsprung. Eine direkte Dekorlage-Dekorlage-Nahtstelle wird so vermieden. Ein solcher Übergang kann besonders sauber und effizient, etwa durch sog. Abzwicken hergestellt werden (siehe Herstellungsverfahren unten).

Der Vorsprung kann den gesamten Raum zwischen den Kanten der Dekorlage ausfüllen. Sinnvollerweise weist ein erfindungsgemäßer Vorsprung die gleiche Stärke wie die Dekorlage an ihren Kanten auf und reicht von der Körperoberfläche bis zu den Außenseiten der angrenzenden Dekorlage.

Der Vorsprung geht dabei übergangslos aus dem Material des Körpers hervor. Diese Einteiligkeit ist für die Herstellung besonders vorteilhaft (s. u.). Beispielsweise können der Vorsprung und der Körper jeweils aus einem Thermoplast bestehen und miteinander verschweißt sein. Besonders vorteilhaft ist es jedoch, wenn der Körper direkt mit dem Vorsprung durch entsprechende Formgebung hergestellt wird, etwa mit Hilfe eines Gießverfahrens.

Zum Aufbringen einer Dekorlage auf ein rundes Auskleidungsteil wird mit einer Form und einer Gegenform gearbeitet. Dazu wird eine Dekorlage mit der Form gegen den Körper gepresst. Der Körper wird dabei so von der Gegenform gestützt, dass ein hinreichend großer Druck erzielt werden kann. Vor dem Zusammenpressen wird üblicherweise ein Film aus einem Klebemittel zwischen der Dekorlage und dem Körper eingebracht. Dies kann etwa ein Kunstharzklebefilm sein. Eine weitere Möglichkeit ist es, die Dekorlage oder den Körper mit einem Kunstharz, etwa einem Epoxidharz, zu besprühen.

Form, Gegenform und Vorsprung können so aufeinander abgestimmt werden, dass die Dekorlage durch Abscherung so durchtrennt wird (sog. Abzwicken), dass sie anschließend flächig mit dem Vorsprung des Körpers in Kontakt steht (ggf. ist der Kontakt nicht direkt, sondern wird über das Klebemittel vermittelt).

Zum Abzwicken können die Form und der Vorsprung so aufeinander abgestimmt sein, dass die Form an dem Vorsprung vorbei gleitet und scherend den über den Vorsprung hervorstehenden Teil der Dekorlage abtrennt. Die Gegenform kann allerdings auch den Vorsprung umschließen und an der der Form zugewandten Seite eine scharfe Kante aufweisen, so dass Form und Gegenform im gemeinsamen Zusammenwirken den überschüssigen Teil der Dekorlage abtrennen.

Da beim Abzwicken die Dekorlage direkt an dem Vorsprung abgetrennt wird, sind besonders saubere Nahtstellen realisierbar. Ein anspruchsvoller durchzuführendes Zuschneiden bzw. Fräsen der Dekorlage vor dem Aufbringen auf den Körper entfällt.

Es ist besonders vorteilhaft, wenn der Körper zwei Vorsprünge aufweist (wie oben zu einer der bevorzugten Ausführungsformen dargestellt). Bei einem solchen Körper können nämlich durch die Vorsprünge abgetrennte Teile der Oberfläche jeweils wie eben beschrieben mit einer Dekorlage versehen werden. Ein weiterer Verfahrensschritt, wie etwa ein Herumführen der Dekorlage um das Auskleidungsteil herum, kann dann entfallen.

Für einen Lenkradkranzkörper (s. u.) würde es sich beispielsweise anbieten, zwei sich diametral an dem Lenkradkranzkörper gegenüber liegende Vorsprünge entlang des großen Umfangs vorzusehen. Ein solcher Lenkradkranzkörper kann wie oben beschrieben mit zwei streifenförmigen Dekorlagen versehen werden. Ein Herumwickeln der Dekorlage ist hier nicht notwendig.

Bei einem zweiteiligen Körper (s. u.), dessen Nähte durch die beiden Vorsprünge verlaufen, ist das Zusammensetzen des Körpers dann unabhängig von dem Aufbringen der Dekorlage. Es kann zuerst die Dekorlage auf die Teile des Körpers aufgebracht werden, bevor diese zusammengesetzt werden und gegebenenfalls noch ein Kern eingebracht wird. Man hat also zusätzliche Freiheiten bei der Herstellung.

Wie oben bereits kurz dargestellt sind gerade Holz-Holz-Nahtstellen besonders empfindlich. Weiter ist Holz als Naturstoff auch in der Verarbeitung besonders anspruchsvoll. Beispielsweise ist es sehr schwierig, durch Fräsen eine perfekt schließende Holznaht für ein rundes Auskleidungsteil herzustellen. Die Erfindung ist gerade im Fall eines Holzfurnieres als Dekorlage besonders vorteilhaft, da sich das Holzfurnier beim direkten Abzwicken an dem Vorsprung dicht schließend an diesen anlegen kann.

Bei einer bevorzugten Ausführungsform der Erfindung ist der Vorsprung an der Oberfläche der Dekorlage relativ schmal ausgebildet; seine Breite nimmt jedoch in Richtung des Körpers zu. So ist einerseits eine gewisse mechanische Stabilität gewährleistet, was sich etwa positiv auf die Handhabbarkeit in der Produktion auswirkt, und andererseits an der sichtbaren Oberfläche der Dekorlage kaum etwas von dem Vorsprung zu sehen. Im Extremfall kann diese Ausführungsform so ausgeführt sein, dass der Vorsprung nur bis direkt an die Oberfläche reicht und die Oberfläche selbst dabei optisch geschlossen erscheint.

Lenkräder, welche einen Lenkradkranz mit einer Dekorlage, insbesondere einem Holzfurnier, aufweisen, sind recht beliebt. Bei einer bevorzugten Ausgestaltung der Erfindung ist das Auskleidungsteil ein Lenkradkranz und der Körper, auf den die Dekorlage aufgebracht ist, der Lenkradkranzkörper. Die beiden Kanten der Dekorlage verlaufen dabei entlang des großen Umfangs des Lenkradkranzes. (Die Begriffe "großer Umfang" und "kleiner Umfang" sind hier nicht streng im mathematischen Sinn zu verstehen. So werden diese etwa auch verwendet, wenn der Lenkradkranzkörper entlang des benannten Umfangs nicht geschlossen ist, etwa weil in dem konkreten Kontext nur ein Lenkradkranzkörperteil betrachtet wird.)

Es ist vorteilhaft, den Körper eines erfindungsgemäßen Auskleidungsteils nicht massiv auszuführen, sondern als eine Schale. Innerhalb der Schale kann dann ein einfacher oder komplexer Kern untergebracht werden, welcher auch durch eine Kombination mehrerer Bestandteile aus unterschiedlichen Materialien in unterschiedlicher Formgebung die mechanischen Eigenschaften des Auskleidungsteils in einer an den Bedarf angepassten Weise mitbestimmen kann.

Beispielsweise kann für einen Lenkradkranz der Kern etwa einen entlang des großen Umfangs umlaufenden Stahlstrang und ein ebenso umlaufendes Magnesiumprofil aufweisen. Restliches Volumen innerhalb der Schale kann dann etwa mit einem Polyurethanschaum ausgefüllt sein.

Bei einer bevorzugten Ausführungsform der Erfindung weist der Körper zwei Vorsprünge auf. Die Dekorlage wird durch die Vorsprünge unterteilt. Für den Spezialfall eines Lenkradkranzes bietet es sich etwa an, die Vorsprünge entlang des großen Umfangs zu positionieren. Entsprechend verlaufen dann zwei Streifen der Dekorlage entlang des großen Umfangs des Lenkradkranzes. Eine solche Ausführungsform ist in der Produktion besonders vorteilhaft (s. o. und das Ausführungsbeispiel), da ein Wickeln der Dekorlage um das Auskleidungsteil entfallen kann.

Es gibt Auskleidungsteile, bei denen der Körper mehrteilig, insbesondere zweiteilig, ausgeführt ist. Die Anzahl der Nähte an der Oberfläche des Körpers zwischen den Teilen des Körpers muss nicht identisch sein mit der Anzahl der Nähte in der Dekorlage. In jedem Fall können die Nähte an der Oberfläche des Körpers auf die Nähte in der Dekorlage des Auskleidungsteils ausgerichtet sein. Wie oben festgestellt, ist ein flächiges Verkleben von stirnseitigen Dekorlagenkanten an sich schon problematisch. Im Falle eines mehrteiligen Körpers umso mehr, als dass bei der Produktion nicht nur die Dekorlage verklebt werden muss, sondern auch noch der darunterliegende Körper. Je größer die Komplexität in der Produktion, umso schwerer ist es natürlich zu gewährleisten, Nahtstellen wirklich sauber zu schließen. Vorzugsweise wird der Vorsprung (oder einer der Vorsprünge) des Körpers daher durch die Naht oder eine der Nähte in dem Körper der Länge nach geteilt. In einer solchen Konfiguration ist die Herstellung eines Auskleidungsteils mit einem mehrteiligen Körper besonders vorteilhaft (s. u. und das zugehörige Ausführungsbeispiel), weil das Aufbringen der Dekorlage und das Zusammenfügen des Körpers entkoppelt sind.

Im Folgenden soll die Erfindung anhand von Ausführungsbeispielen näher erläutert werden. Die dabei offenbarten Einzelmerkmale können auch in anderen Kombinationen erfindungswesentlich sein.
- Figur 1: zeigt die fahrerseitige Draufsicht auf ein Lenkrad mit einem Lenkradkranz als erfindungsgemäß hergestelltes Auskleidungsteil.
- Figur 2: zeigt einen Querschnitt durch den Lenkradkranz des Lenkrades aus Figur 1.
- Figuren 3a - 3e: zeigen einen Ausschnitt aus dem Querschnitt der Figur 2 für verschiedene Ausführungsformen der Erfindung.
- Figur 4: zeigt wie Figur 2 einen Querschnitt durch einen Lenkradkranz, allerdings mit einem veränderten Lenkradkranzkörper.
- Figuren 5a - 5c: zeigen Ausschnitte aus dem Querschnitt der Figur 4 für verschiedene Ausführungsformen der Erfindung.
- Figur 6: zeigt einen weiteren Querschnitt durch einen erfindungsgemäß hergestellten Lenkradkranzkörper.
- Figur 7: zeigt einen Ausschnitt aus dem Querschnitt aus Figur 6.
- Figur 8: zeigt eine Vorrichtung, die bei der erfindungsgemäßen Herstellung verwendet wird.
- Figur 9: zeigt einen Ausschnitt aus der Vorrichtung aus Figur 8.

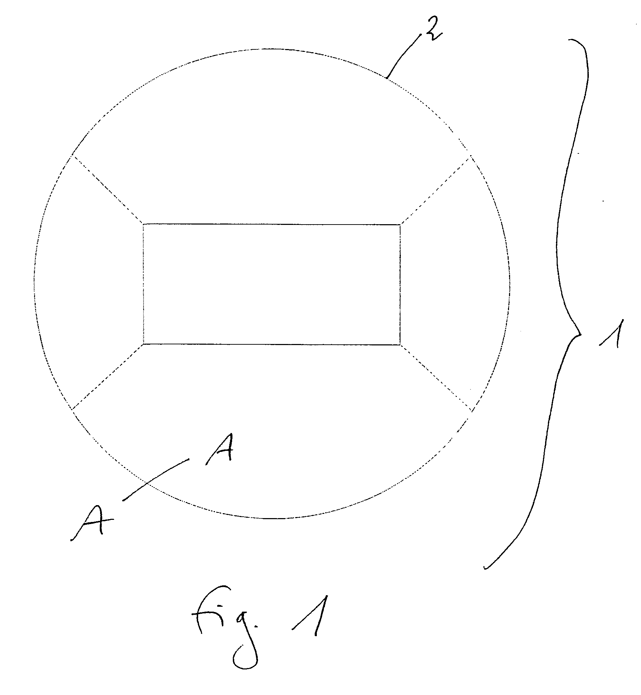

Figur 1 zeigt ein Lenkrad 1 von der einem Fahrer zugewandten Seite aus. Das Lenkrad 1 weist einen außen umlaufenden, einem erfindungsgemäß hergestellten Auskleidungsteil entsprechenden Lenkradkranz 2 auf. In dem Lenkradkranz 2 ist eine Querschnittsfläche A-A markiert.

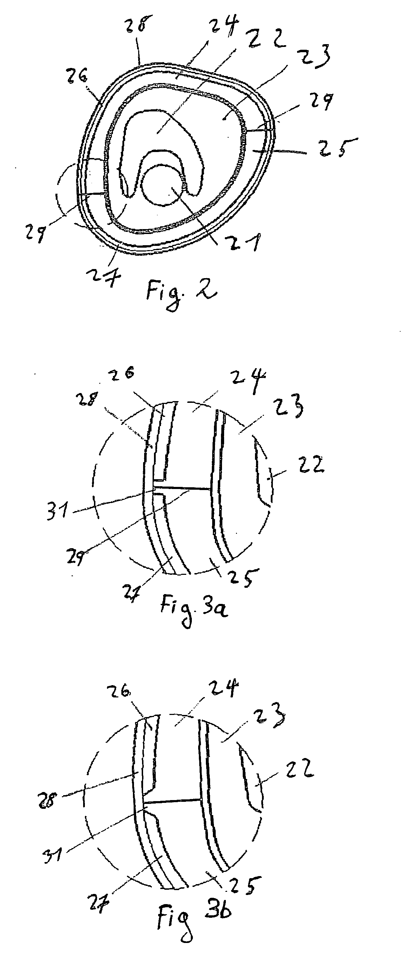

Figur 2 zeigt den Querschnitt entlang der Querschnittsfläche A-A. Dieser Querschnitt veranschaulicht einen üblichen Aufbau eines Lenkradkranzes. In das Innere sind ein Stahlband 21, ein Magnesiumprofil 22 und Polyurethanschaum 23 eingebracht. Die Kombination dieser Bestandteile bestimmt wesentlich die mechanischen Eigenschaften des fertigen Lenkradkranzes. Das Stahlband 21 zusammen mit dem Magnesiumprofil 22 und dem Polyurethanschaum 23 werden als Kern des Lenkradkranzes bezeichnet. Der Kern 21, 22, 23 ist durch zwei Halbschalen 24, 25 aus Kunststoff (hier Polyamid) eingefasst. Die zwei Halbschalen 24, 25 stoßen an Nahtstellen 29 aneinander.

Auf die beiden Halbschalen 24, 25 ist eine Dekorlage, hier ein Holzfurnier 26, 27, aufgebracht. Abschließend ist eine Lackschicht 28 aufgetragen. Auch die beiden Halbschalen 24, 25 und die Holzfurniere 26, 27 werden durch die Nahtstellen 29 voneinander getrennt.

Die Figuren 3a - 3e zeigen einen Ausschnitt aus dem Querschnitt der Figur 2 um die linke Naht 29 für verschiedene Ausführungsformen.

Figur 3a zeigt von rechts nach links zunächst noch einen kleinen Teil des Magnesiumprofils 22. Es folgen das Polyurethan 23 und die beiden Halbschalen 24, 25, welche in der Naht 29 aufeinander stoßen. Auf der Halbschale 24 liegt die Dekorlage 26 und auf der Halbschale 25 das Holzfurnier 27 auf. Zwischen den beiden Dekorlagen 26, 27 liegt ein aus den beiden Halbschalen 24, 25 ausgebildeter Vorsprung 31. Der Vorsprung 31 ist durch die Naht 29 in einen oberen Teil und einen unteren Teil geteilt. Auf die beiden Dekorlagen 26, 27 und den Vorsprung 31 ist die Lackschicht 28 aufgebracht.

Der Übersichtlichkeit halber werden die bisher eingeführten Bezugszeichen für entsprechende Merkmale weiter verwendet, auch wenn diese an sich anders ausgebildet sind oder zu einer anderen Ausführungsform gehören.

In Figur 3b ist der Vorsprung 31 anders ausgebildet als in Figur 3a. Er ist in der Basis breiter als an der der Lackschicht 28 zugewandten Seite.

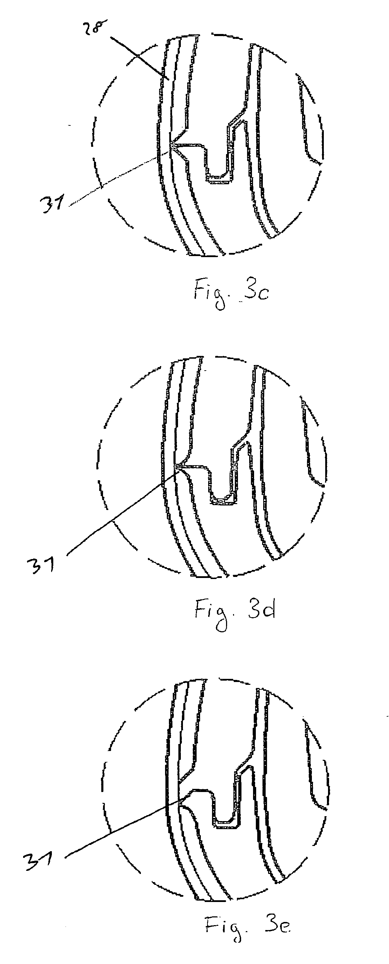

Figur 3c zeigt eine weitere Abwandlung des Vorsprungs 31, welcher auch an der Basis stärker ausgebildet ist als an der der Lackschicht 28 zugewandten Seite. An seiner der Lackschicht 28 zugewandten Seite ist er jedoch im Wesentlichen linienförmig.

Figur 3d zeigt eine Abwandlung des Vorsprungs 31, bei dem die Flanken des Vorsprungs verrundet sind. In der Herstellung (beim Abzwicken, s. u.) kann die Dekorlage sich so besonders gut an die Form des Vorsprungs 31 anpassen.

Figur 3e zeigte eine weitere alternative Geometrie mit einem Vorsprung 31.

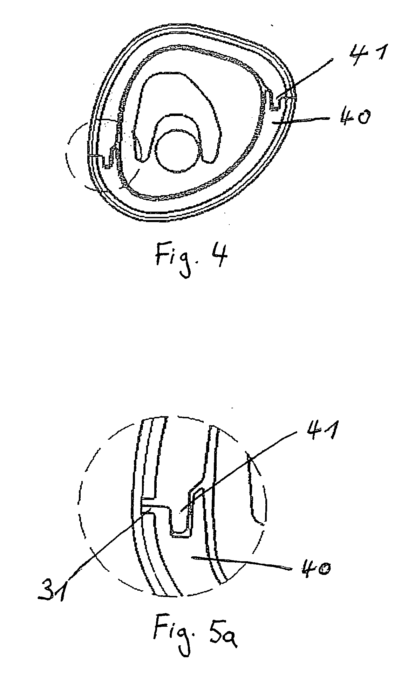

Wie Figur 2 zeigt Figur 4 einen Querschnitt durch einen erfindungsgemäßen Lenkradkranz. Anders als in Figur 2 sind zwei Halbschalen nicht durch eine glatte Naht (29 in Figur 2), sondern mittels einer Nut 40 und einer Feder 41 miteinander verbunden. Es liegen keine weiteren Abweichungen im Vergleich zu Figur 2 vor.

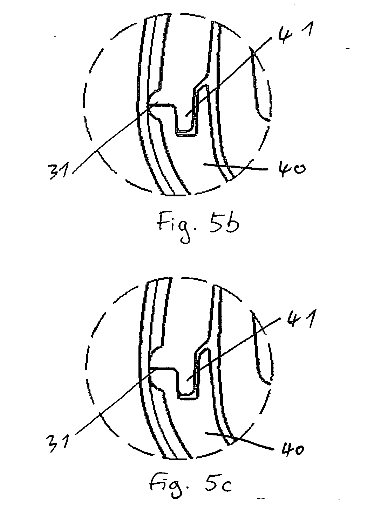

Figuren 5a - 5c zeigen jeweils einen Ausschnitt des Querschnitts aus Figur 4 um die linke Nut-und-Feder-Kombination 40, 41. Genau wie in den Figuren 3a - 3e gibt es natürlich verschiedene Möglichkeiten einen Vorsprung 31 auszubilden.

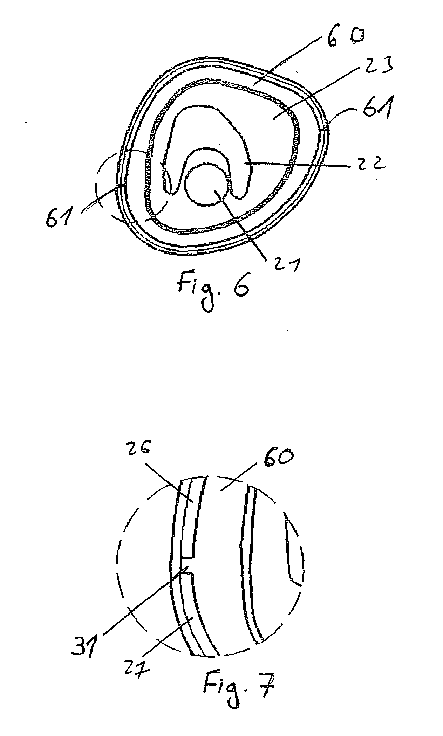

Figur 6 zeigt einen weiteren Querschnitt durch den erfindungsgemäßen Lenkradkranz. Neue Bezugszeichen sind nur eingeführt, soweit sich Abweichungen gegenüber dem zuvor Vorgestellten ergeben. Der Kern 21, 22, 23 ist nun nicht mehr von einer zweiteiligen Schale (wie in Figur 2 und in Figur 4) umgeben, sondern von einer einteiligen sog. Vollschale 60. Auch hier weist die Dekorlage zwei Nahtstellen 61 auf.

Figur 7 zeigt einen Ausschnitt aus dem Querschnitt aus Figur 6 um die linke der Nahtstellen 61. Ein Vorsprung 31 ragt aus der Vollschale 60 heraus, so dass auch hier die Dekorlagen 26, 27 nicht aneinander stoßen. Natürlich erlaubt auch eine solche Ausführungsform zahlreiche Gestaltungen des Vorsprungs 31.

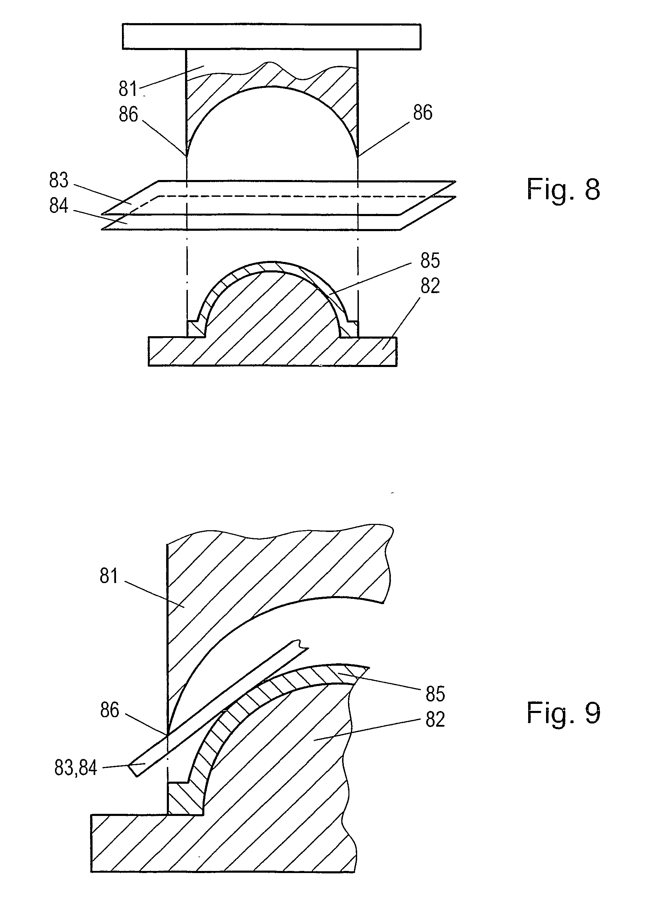

Figur 8 zeigt eine Vorrichtung zum Aufbringen einer Dekorlage 83, hier einem Holzfurnier, auf eine Halbschale 85 für einen Lenkradkranzkörper. Dazu wird mit einer Form 81 die Dekorlage 83 zusammen mit einem Trockenklebefilm 84 (hier einem Kunstharz) auf die Halbschale 85 aufgepresst. Die Halbschale 85 wird von einer Gegenform 82 gestützt. Beim Anpressen der Dekorlage 83 an die Halbschale 85 wird die Dekorlage 83 durch Kanten 86 der Form 81 abgetrennt (Abzwicken).

Auf diese Weise kann auch ein Stapel aus mehreren Dekorlagen, etwa Holzfurnieren mit quer zueinander liegenden Faserrichtungen, mit dazwischen liegenden Klebefilmen auf einen Lenkradkranzkörper aufgebracht werden.

Figur 9 zeigt ein Detail der Vorrichtung aus Figur 8 während des Abzwickens. Die Form 81 durchtrennt die Dekorlage 83 bzw. den Trockenklebfilm 84 an ihrer Kante 86 so, dass der über den Vorsprung hinaus ragende Teil der Dekorlage 83 und des Trockenklebefilms 84 abgetrennt werden. Ansonsten presst die Form 81 die Dekorlage 83 und den Trockenklebefilm 84 auf die Halbschale 85.

## Patentansprüche

1. Verfahren zur Herstellung eines Auskleidungsteils (2) mit den Schritten:
Aufbringen einer Dekorlage (26, 27, 83) auf einen Körper (24, 25, 60, 85), so dass die Dekorlage (26, 27, 83) den Körper umfasst, wobei die Dekorlage (26, 27, 83) zwei Kanten aufweist, welche über ihre Stärke flächig voneinander beabstandet sind,
Einbringen eines aus dem Körper (24, 25, 60, 85) hervortretenden Vorsprungs (31) in den Abstand zwischen den beiden Kanten,
**gekennzeichnet durch** die weiteren Schritte:
Aufbringen der Dekorlage (26, 27, 83) auf den Körper (24, 25, 60, 85) **durch** Anpressen mit einer Form und einer Gegenform und
Abzwicken der Dekorlage (26, 27, 83) an dem zu dem Körper (24, 25, 60, 85) distalen Ende des hervortretenden Vorsprunges (31).

2. Verfahren nach Anspruch 1, bei dem der Körper (24, 25, 60, 85) zwei aus dem Körper (24, 25, 60, 85) hervortretende Vorsprünge (31) aufweist und die Dekorlage (26, 27, 83) jeweils an dem zu dem Körper (24, 25, 60, 85) distalen Ende der Vorsprünge (31) abgezwickt wird

3. Verfahren nach Anspruch 1 oder 2, bei dem die Dekorlage (26, 27, 83) ein Holzfurnier (83) ist.

4. Verfahren nach einem der vorangehenden Ansprüche, bei dem das der Oberfläche des Auskleidungsteils (2) zugewandte Ende des Vorsprungs (31) schmaler ist als das dem Körper (24, 25, 60, 85) zugewandte Ende.

5. Verfahren nach einem der vorangehenden Ansprüche, bei dem das Auskleidungsteil als Lenkradkranz (2) ausgelegt ist, der Körper (24, 25, 60, 83) ein Lenkradkranzkörper (24, 25, 60, 85) ist und bei dem die zwei Kanten entlang des großen Umfangs des Lenkradkranzes (2) verlaufen.

6. Verfahren nach einem der vorangehenden Ansprüche, bei dem der Körper (24, 25, 60, 85) eine Schale (24, 25, 60, 85) ist und einen inneren Kern (21, 22, 23) umschließt.

7. Verfahren nach einem der vorangehenden Ansprüche, bei dem die Dekorlage (26, 27, 83) vier Kanten aufweist und auf den Körper so aufgebracht wird, dass jeweils zwei der Kanten über ihre Stärke flächig voneinander beabstandet sind und in beiden Abständen jeweils ein Vorsprung (31) des Körpers (24, 25, 60, 85) vorgesehen ist.

8. Verfahren nach einem der vorangehenden Ansprüche, bei dem der Körper (24, 25, 85) mehrteilig ausgeführt ist und eine Naht (29) zwischen den Teilen durch den Vorsprung des Körpers (24, 25, 85) verläuft.

9. Lenkrad (1) mit einem Auskleidungsteil (2) hergestellt nach Anspruch 5, auch in Kombination mit einem weiteren der vorangehenden Ansprüche.

## Claims

1. A method for manufacturing a lining part (2) having the steps:
applying a decoration layer (26, 27, 83) to a body (24, 25, 60, 85) so that said decoration layer (26, 27, 83) covers said body, wherein said decoration layer (26, 27, 83) comprises two edges, which are spaced, as regards their surface, over their thickness,
positioning a protrusion (31) protruding from said body (24, 25, 60, 85) in the space between said both edges,
**characterized by** the further steps:
applying said decoration layer (26, 27, 83) to said body (24, 25, 60, 85) by pressing with a mould and a counter mould and
pinching off said decoration layer (26, 27, 83) at the end of said protrusion (31), located distally to said body (24, 25, 60, 85).

2. The method according to claim 1, wherein said body (24, 25, 60, 85) comprises two protrusions (31) protruding from said body (24, 25, 60, 85) and said decoration layer (26, 27, 83) is pinched off at each respective end of said protrusions (31) located distally to said body (24, 25, 60, 85).

3. The method according to claim 1 or 2, wherein said decoration layer (26, 27, 83) is a wooden veneer (83).

4. The method according to one of the preceding claims, wherein the end of said protrusion (31) towards the surface of said lining part (2) is narrower than the end towards said body (24, 25, 60, 85).

5. The method according to one of the preceding claims, wherein said lining part is designed as steering wheel rim (2), said body (24, 25, 60, 85) is a body of a steering wheel rim (24, 25, 60, 85) and wherein said two edges extend along the large circumference of said steering wheel rim (2).

6. The method according to one of the preceding claims, wherein said body (24, 25, 80, 85) is a hull (24, 25, 60, 85) enclosing an inner core (21, 22, 23).

7. The method according to one of the preceding claims, wherein said decoration layer (26, 27, 83) comprises four edges and is applied to said body in such a way that two respective edges are spaced, as regards their surface, over their thickness and a respective protrusion (31) of said body (24, 25, 60, 85) is provided in each space.

8. The method according to one of the preceding claims, wherein said body (24, 25, 85) is built of several parts and a seam (29) between said parts passes through said protrusion (31) of said body (24, 25, 85).

9. A steering wheel (1) with a lining part (2) manufactured according to claim 5, also in combination with a further one of the preceding claims.

## Revendications

1. Procédé de fabrication d'une pièce d'habillage (2) comportant les étapes:
appliquer une couche décorative (26, 27, 83) sur un corps (24, 25, 60, 85), de telle sorte que la couche décorative (26, 27, 83) englobe le corps, moyennant quoi la couche décorative (26, 27, 83) présente deux arêtes, lesquelles sont espacées l'une de l'autre à plat sur leur épaisseur,
insérer une pièce en saillie (31) dépassant du corps (24, 25, 60, 85) dans l'espace entre les deux arêtes,
**caractérisé par** les étapes supplémentaires:
appliquer la couche décorative (26, 27, 83) sur le corps (24, 25, 60, 85) par pressage avec un moule et un contre-moule et
couper la couche décorative (26, 27, 83) à l'extrémité distale de la pièce en saillie (31) dépassant du corps (24, 25, 60, 85).

2. Procédé selon la revendication 1, dans lequel le corps (24, 25, 60, 85) présente deux pièces en saillie (31) dépassant du corps (24, 25, 60, 85) et la couche décorative (26, 27, 83) est respectivement coupée à l'extrémité distale de la pièce en saillie (31) par rapport au corps (24, 25, 60, 85).

3. Procédé selon la revendication 1 ou 2, dans lequel la couche décorative (26, 27, 83) est un placage de bois (83).

4. Procédé selon une des revendications précédentes, dans lequel l'extrémité de la pièce en saillie (31) tournée vers la surface supérieure de la pièce d'habillage (2) est plus mince que l'extrémité tournée vers le corps (24, 25, 60, 85).

5. Procédé selon une des revendications précédentes, dans lequel la pièce d'habillage est conçue comme une couronne de volant de direction (2), le corps (24, 25, 60, 83) est un corps de couronne de volant de direction (24, 25, 60, 83) et dans lequel les deux arêtes s'étendent le long de la grande circonférence de la couronne de volant de direction (2).

6. Procédé selon une des revendications précédentes, dans lequel le corps (24, 25, 60, 85) est une coque (24, 25, 60, 85) et renferme un noyau interne (21, 22, 23).

7. Procédé selon une des revendications précédentes, dans lequel la couche décorative (26, 27, 83) présente quatre arêtes et est appliquée sur le corps, de telle sorte que respectivement deux des arêtes soient espacées l'une de l'autre à plat par leur épaisseur et une pièce en saillie (31) du corps (24, 25, 60, 85) soit respectivement prévue dans les deux espaces.

8. Procédé selon une des revendications précédentes, dans lequel le corps (24, 25, 85) est conçu en plusieurs pièces et une couture (29) s'étend entre les pièces à travers la pièce en saillie du corps (24, 25, 85).

9. Volant de direction (1) comportant une pièce d'habillage (2) fabriquée selon la revendication 5, également en combinaison avec une autre des revendications précédentes.
